# EUROPÄISCHE PATENTANMELDUNG

(11) **EP 2 037 229 A1**
(43) Veröffentlichungstag der Anmeldung: **18.03.2009**
(21) Anmeldenummer: 08005218.6
(22) Anmeldetag: 19.03.2008
(51) Int. Cl.: G01D 5/347, B66C 13/16

(54) **Verfahren und Vorrichtung zum Bestimmen der Position eines Fahrzeugs**

(30) Priorität: 12.09.2007 DE 102007043498; 12.09.2007 DE 202007012798 U
(71) Anmelder: Pepperl + Fuchs GmbH, 68307 Mannheim (DE)
(72) Erfinder: Hofmann, Hilmar, 69502 Hemsbach (DE); Opper, Rüdiger, 67240 Bobenheim-Roxheim (DE); Kirsch, Martin, 68259 Mannheim (DE)
(74) Vertreter: Schiffer, Axel Martin

(57) **Zusammenfassung**

Die Erfindung betrifft ein Verfahren und eine Vorrichtung zum Bestimmen der Position eines Fahrzeugs, welches entlang einer Bahn bewegt wird, wobei entlang der Bahn Marker, insbesondere Codeträger oder Barcodes, angeordnet sind. Das Verfahren ist dadurch gekennzeichnet, dass die Marker mit einer an dem Fahrzeug angeordneten Digitalkamera erfasst werden, dass mittels Bildverarbeitung aus einer Lage mindestens eines Markerbilds im Erfassungsbereich der Digitalkamera eine Relativposition des Fahrzeugs bezüglich des jeweiligen Markers oder der jeweiligen Marker bestimmt wird und dass mittels Bildverarbeitung eine Darstellungsqualität der Marker bestimmt und ausgewertet wird. Die Erfindung betrifft außerdem ein Computerprogramm und eine Computerprogrammprodukt.

## Beschreibung

Die vorliegende Erfindung betrifft in einem ersten Aspekt ein Verfahren zum Bestimmen der Position eines Fahrzeugs nach dem Oberbegriff des Anspruchs 1.

In einem weiteren Gesichtspunkt bezieht sich die Erfindung auf eine Vorrichtung zum Bestimmen der Position eines Fahrzeugs nach dem Oberbegriff des Anspruchs 10.

Außerdem betrifft die Erfindung ein Computerprogramm und ein Computerprogrammprodukt.

Ein gattungsgemäßes Verfahren ist beispielsweise in DE 199 10 933 A1 offenbart. Hierbei wird ein Fahrzeug entlang einer Bahn, welche grundsätzlich entlang einer beliebigen Kurve verlaufen kann, bewegt und zur Positionsbestimmung sind entlang der Bahn als Marker eindimensionale Barcodes angeordnet. Die Erfindung bezieht sich insbesondere auf Fahrzeuge wie Einschienen-Hängebahnen, Regalbediengeräte, Krananlagen oder sonstige verfahrbare Geräte, die entlang einer Bahn oder auf oder parallel zu einer vorgegebenen Fläche verfahrbar sind.

Weitere Positionierverfahren sind in EP 0 039 921 A2, DE 38 25 097 A1, EP 0 116 636 A1, DE 39 10 873 A1, DE 42 09 629 A1 und DE 43 09 863 C1 beschrieben. Diese bekannten Systeme weisen folgende Nachteile auf.

Die erreichbare Genauigkeit der Positionsbestimmung ist durch die Länge der Codemarken oder deren Elemente begrenzt, da die Codeelemente in einer oder mehreren parallelen Spuren längs des Fahrwegs aufgereiht sind und beim Verfahren nacheinander abgetastet werden müssen. Die Packungsdichte der Codeelemente auf dem Codeträger kann aber nicht über ein gewisses Maß hinaus erhöht werden, weil das räumliche Auflösungsvermögen der Abtastelemente, z.B. Lichtschranken, begrenzt ist. Die Länge der Codeträger kann daher nicht unter einen bestimmten Mindestwert verkleinert werden, so dass der Positionsauflösung Grenzen gesetzt sind.

Ferner ist zur lückenlosen Abdeckung eines langen Fahrwegs mit ausreichender Längsauflösung eine große Anzahl von Codeträgern und somit, wenn sich der Codeinhalt längs des Fahrweges nicht wiederholen soll, eine entsprechend große Wortbreite der Codes erforderlich. Eine zunehmende Wortbreite lässt aber nicht nur die Länge der einzelnen Codeträger, sondern vor allem auch den Aufwand und die Kosten für die Codeleser sehr schnell anwachsen.

Ferner geht mit längeren Codeträgern eine geringere Auflösung der Positionsbestimmung einher, so dass eine Realisierung von Fahrwegen von mehreren Kilometern, die z.B. in modernen industriellen Fertigungsstraßen erwünscht oder notwendig sein können, mit hinreichender Auflösung schwierig ist. Diese Problematik wird noch erheblich verschärft, wenn auf den Codeträgern redundante Informationen vorhanden sein sollen, um die Betriebssicherheit des Systems, z.B. dessen Resistenz gegen Verschmutzung oder Beschädigung von Teilen des Codeträgers, zu verbessern und dadurch das Risiko von Ausfällen oder, unter Umständen folgenschweren, Fehlpositionierungen zu verringern.

Außerdem erlaubt keines der bekannten Systeme zusätzlich zur Positionsbestimmung in Fahrtrichtung auch eine Positionsbestimmung quer zur Fahrtrichtung. Eine solche kann etwa zum automatischen Ausgleich von temperatur- oder lastwechselbedingten Biegeverformungen wünschenswert sein. Darüber hinaus sind die erforderlichen Abtastelemente, bevorzugt Lichtschranken, anfällig für Dejustierungen und Verschmutzungen und damit wartungsintensiv. Dies spielt insbesondere eine Rolle bei Systemen mit einer Vielzahl von nebeneinander angeordneten Abtastelementen.

Ein weiterer Nachteil der genannten Systeme besteht darin, dass eine Positionsbestimmung bei stillstehendem Fahrzeug nicht ohne weiteres möglich ist. Diejenigen Systeme, welche im Durchlichtverfahren arbeiten, sind außerdem mechanisch aufwändig und anfällig gegen Verformungen des Codeträgers. Einige der oben genannten Systeme sind ferner sehr empfindlich gegen eine Änderungen der Orientierung der Codeträger gegenüber dem Codeleser.

Grundsätzlich zu berücksichtigen ist bei solchen optischen Erkennungs- und Abtastsystemen außerdem, dass eine zuverlässige Positionsbestimmung nur dann möglich ist, wenn die optischen Strahlwege frei und die abzulesenden optischen Strukturen nicht verschmutzt oder zerstört sind.

Als eine Aufgabe der Erfindung kann angesehen werden, ein Verfahren bereitzustellen und eine Vorrichtung zu schaffen, welche eine verbesserte Positionsauflösung ermöglichen und längere Fahrwege erlauben. Darüber hinaus soll auch eine Information über die Zuverlässigkeit der Messung geliefert werden. Außerdem soll ein geeignetes Computerprogramm angegeben werden.

In einem ersten Gesichtspunkt wird diese Aufgabe durch das Verfahren mit den Merkmalen des Anspruchs 1 gelöst.

In einem weiteren Aspekt wird diese Aufgabe durch die Vorrichtung mit den Merkmalen des Anspruchs 10 gelöst.

Außerdem wird die Aufgabe gelöst durch das Computerprogramm mit den Merkmalen des Anspruchs 14 und das Computerprogrammprodukt mit den Merkmalen des Anspruchs 15.

Bevorzugte Ausführungsvarianten des erfindungsgemäßen Verfahrens und vorteilhafte Varianten der erfindungsgemäßen Vorrichtung sind Gegenstand der abhängigen Ansprüche.

Das Verfahren der oben genannten Art ist erfindungsgemäß dadurch weitergebildet, dass die Marker mit einer an dem Fahrzeug angeordneten Digitalkamera erfasst werden, dass mittels Bildverarbeitung aus einer Lage mindestens eines Markerbilds im Erfassungsbereich der Digitalkamera eine Relativposition des Fahrzeugs bezüglich des jeweiligen Markers oder der jeweiligen Marker bestimmt wird und dass mittels Bildverarbeitung außerdem eine Darstellungsqualität der Marker bestimmt und ausgewertet wird.

Die Vorrichtung der oben genannten Art ist erfindungsgemäß weitergebildet durch eine an dem Fahrzeug anzuordnende Digitalkamera zum Erfassen von entlang der Bahn angeordneten Markern, insbesondere Codeträgern oder Barcodes, und eine Recheneinrichtung, welche eingerichtet ist zum Bestimmen einer Relativposition des Fahrzeugs bezüglich mindestens eines Markers mittels Bildverarbeitung aus einer Lage des Bilds des jeweiligen Markers oder der Bilder der jeweiligen Marker in einem Erfassungsbereich der Digitalkamera und zum Bestimmen und Auswerten einer Darstellungsqualität der Marker mittels Bildverarbeitung.

Erfindungsgemäß wurde zunächst erkannt, dass mit Hilfe von Bildverarbeitungsverfahren eine Positionsbestimmung eines Fahrzeugs in sehr präziser Weise möglich ist, indem die Position oder Lage eines bestimmten Markers in einem Erfassungsbereich einer Digitalkamera bestimmt und ausgewertet wird.

Das erfindungsgemäße Verfahren, bei welchem es sich um ein Auflichtverfahren handelt, kann insbesondere auch eine Positionsinformation für ein stillstehendes Fahrzeug liefern und, im Unterschied zu Verfahren aus dem Stand der Technik, ist auch eine Positionsbestimmung quer zur Fahrt- oder Bewegungsrichtung möglich.

Als ein weiterer wesentlicher Kerngedanke der Erfindung kann erachtet werden, die Methode der Bildverarbeitung nicht nur für die Bestimmung der Ortsposition heranzuziehen, sondern auch eine Darstellungsqualität der Marker zu bestimmen, auszuwerten und in geeigneter Form auszugeben, beispielweise einer Steuerung zur Verfügung zu stellen.

Hieraus ergibt sich als wichtiger Vorteil, dass das erfindungsgemäße Verfahren und die erfindungsgemäße Vorrichtung einen Hinweis liefern kann, wenn beispielsweise die Darstellungsqualität der Marker zu schlecht ist, als das mit der gewünschten Rate und demgemäß mit der gewünschten Genauigkeit ein Positionswert geliefert werden kann.

Bei der Digitalkamera kann es sich um bekannte und verfügbare Komponenten handeln, beispielsweise können Kameras mit einem CCD- oder einem CMOS-Empfängerchip eingesetzt werden.

Bei speziellen Varianten der erfindungsgemäßen Vorrichtung ist die Recheneinrichtung in die Digitalkamera integriert.

Als Marker können grundsätzlich alle graphisch darstellbaren Codierungs- und Markierungstypen verwendet werden, deren Strukturen und damit die dort enthaltene Information mit einer Digitalkamera erkannt und ausgewertet werden können.

Bevorzugt werden Barcodes, insbesondere zweidimensionale Barcodes, eingesetzt.

Damit eine Positionsbestimmung eindeutig möglich ist, werden darüber hinaus zweckmäßig Marker verwendet, die jedenfalls bei guter Darstellungsqualität, also wenn diese Marker nicht verschmutzt oder ganz oder teilweise zerstört sind, mittels Bildverarbeitung eindeutig unterscheidbar sind.

Die Erkennung der Marker mittels Bilderkennung ist dabei zuverlässiger möglich, wenn die Marker an der Bahn mit einem Abstand voneinander angeordnet sind, der größer ist als die kleinste Struktur der Marker. Beispielsweise werden die Marker im Fall von zweidimensionalen Barcodes in einem Abstand angeordnet, der mindestens so groß ist wie eine minimale Informationseinheit, insbesondere also mindestens so groß ist wie ein Bit dieser zweidimensionalen Barcodes.

Im Hinblick auf den Einsatz des erfindungsgemäßen Verfahrens und der erfindungsgemäßen Vorrichtung in industriellen Umgebungen, bei denen mit einem signifikanten Eintrag von Verschmutzungen zu rechnen ist, werden bevorzugt Marker eingesetzt, bei denen die Information in den Markern jeweils redundant vorhanden ist. Grundsätzlich kann die in den Markern jeweils enthaltene Information wenigstens teilweise im Klartext und/oder wenigstens teilweise codiert wiedergegeben sein.

Bei besonders bevorzugten Varianten werden Marker verwendet, bei denen dieselbe Information jeweils sowohl im Klartext als auch codiert vorliegt.

Grundsätzlich kann für die Codierung der Marker auf bekannte Algorithmen zurückgegriffen werden. Bevorzugt werden Marker eingesetzt, bei denen die Information in Reed-Solomon-Codierung vorliegt. Mit dem Reed-Solomon-Code wird eine besonders große Toleranz fehlerhafter Codes erzielt.

Die Zuverlässigkeit der ausgegebenen Positionsinformation kann erhöht werden, wenn zum Überprüfen der Konsistenz der ermittelten Position die als Klartext vorhandene Information eines Markers mit der codierten Information des Markers verglichen wird.

Weitere Verbesserungen sind in dieser Hinsicht möglich, wenn zum Überprüfen der Konsistenz der ermittelten Information die Ergebnisse von zurückliegenden Messungen berücksichtigt werden.

Bei einer weiteren besonders bevorzugten Variante des erfindungsgemäßen Verfahrens wird ein Fehlersignal ausgegeben, wenn die Darstellungsqualität der Marker unter einen festgelegten Wert sinkt. Die Sicherheit des Gesamtsystems kann auf diese Weise gesteigert werden, da beispielsweise ein Fahrzeug rechtzeitig gestoppt werden kann, wenn keine zuverlässige Positionsinformation mehr vorliegt.

Beispielsweise kann ein Fehlersignal ausgegeben werden, wenn eine festzulegende Anzahl von Markern hintereinander unlesbar ist.

Eine vergleichsweise einfach zu realisierende Sicherheitsüberprüfung besteht außerdem darin, dass mittels Bildverarbeitung geprüft wird, ob die Bereiche zwischen den Markern strukturfrei, insbesondere weiß, sind.

Grundsätzlich kann es ausreichend sein, aus den festgestellten Markerbildern im Erfassungsbereich der Digitalkamera jeweils die Relativposition des Fahrzeugs bezüglich des jeweiligen Markers zu bestimmen. Bei einer Weiterentwicklung des erfindungsgemäßen Verfahrens kann zusätzlich aus der Relativposition bezüglich eines bestimmten Markers und einer bekannten Absolutposition dieses Markers eine Absolutposition des Fahrzeugs, beispielsweise bezogen auf einen bestimmten Punkt in einer Fertigungshalle, bestimmt werden. Die Absolutposition kann dann direkt ausgegeben und beispielsweise von einer speicherprogrammierbaren Steuerung an andere Komponenten weitergegeben werden.

Bei einer weiteren besonders vorteilhaften Ausgestaltung der erfindungsgemäßen Vorrichtung ist ein mit dem Fahrzeug zu koppelnder Beschleunigungssensor zumindest zum Messen der Beschleunigung des Fahrzeugs in einer Hauptbewegungsrichtung des Fahrzeugs vorhanden und die Recheneinrichtung ist außerdem eingerichtet zum Bestimmen einer von dem Fahrzeug bis zu einem Abfragezeitpunkt zurückgelegten Wegstrecke auf Grundlage von Messdaten des Beschleunigungssensors und einer für einen zurückliegenden Zeitpunkt bekannten Geschwindigkeit des Fahrzeugs und zum Berechnen einer aktuellen Position des Fahrzeugs unter Berücksichtigung eines zurückliegenden Positionsdatums und der auf Grundlage von Messdaten des Beschleunigungssensors bestimmten Wegstrecke.

Wenn beispielsweise die Positionsinformation von einem Marker oder mehreren Markern hintereinander ausfällt, können die Messwerte des Beschleunigungssensors herangezogen werden, um auf Grundlage des zuletzt ermittelten Positionswerts und der Beschleunigungsinformation des Beschleunigungssensors einen neuen Positionswert zu extrapolieren.

Grundsätzlich kann die von dem Fahrzeug in einem Zeitraum von einem zurückliegenden Positionsdatum bis zu einem Abfragezeitpunkt zurückgelegte Wegstrecke durch Integration der von dem Beschleunigungssensor in diesem Zeitraum aufgenommenen Messdaten unter Berücksichtigung der Geschwindigkeit des Fahrzeugs zu Beginn des Zeitraums bestimmt werden. Für Konsistenztests kann beispielsweise die zurückgelegte Wegstrecke auch ausgehend von unterschiedlichen bekannten zurückliegenden Positionen bestimmt werden.

Bei einer einfachen Variante wird die aktuelle Position des Fahrzeugs als Summe des letzten Positionsdatums und der seither zurückgelegten und auf Grundlage von Messdaten des Beschleunigungssensors bestimmten Wegstrecke bestimmt.

Wegen des zugrundeliegenden Messprinzips liegt bei dem hier beschriebenen Verfahren eine präzise Positionsinformation immer dann vor, wenn ein Markerbild durch Bildverarbeitung ausgewertet und zumindest die zu diesem Marker gehörende Relativposition des Fahrzeugs ermittelt wurde.

Dies ermöglicht eine weitere vorteilhafte Variante des erfindungsgemäßen Verfahrens, bei der der Beschleunigungssensor geeicht wird durch Vergleich von zurückliegenden mit Hilfe der Marker bestimmten Positionsdaten mit denjenigen Positionsdaten, die sich auf Grundlage von Messdaten des Beschleunigungssensors ergeben.

Insbesondere kann der Beschleunigungssensor geeicht werden durch Vergleich des letzten Positionsdatums mit der Position, welche sich aus dem vorletzten Positionsdatum und der zwischen den Aufnahmezeitpunkten des vorletzten und des letzten Positionsdatums zurückgelegten und auf Grundlage der Messdaten des Beschleunigungssensors bestimmten Wegstrecke ergibt.

Besonders bevorzugt kann dabei der Beschleunigungssensor im laufenden Betrieb kontinuierlich nachgeeicht werden.

Die Beschleunigungsdaten können außerdem herangezogen werden, um beispielsweise eine Information über den technischen Zustand des fraglichen Fahrzeugs und insbesondere darüber zu erhalten, ob demnächst eine Wartungsphase durchgeführt werden sollte. Bei einem vorteilhaften Ausführungsbeispiel des erfindungsgemäßen Verfahrens wird demgemäß ein Fehlersignal ausgegeben, wenn die Beschleunigung des Fahrzeugs über einen festgelegten Zeitraum innerhalb oder außerhalb eines ebenfalls festgelegten Werteintervalls liegt.

Die Informationsgrundlage wird dabei verbreitert, wenn auch Beschleunigungen des Fahrzeugs quer zu seiner Hauptbewegungsrichtung gemessen und mitprotokolliert werden. Zweckmäßig wird hierfür ein zweiachsiger Beschleunigungssensor eingesetzt, der zum Messen einer Beschleunigung des Fahrzeugs in einer x- und in einer y-Richtung ausgelegt ist. Als x-Richtung kann dabei eine Hauptbewegungsrichtung des Fahrzeugs angesehen werden und die y-Richtung ist dann eine Richtung quer zur Hauptbewegungsrichtung des Fahrzeugs. Der zweiachsige Beschleunigungssensor ist dementsprechend bevorzugt so an dem Fahrzeug positioniert, dass die erste Messachse in Richtung der Hauptbewegungsrichtung des Fahrzeugs und die zweite Messachse in Richtung quer zur Hauptbewegungsrichtung des Fahrzeugs ausgerichtet ist.

Beispielsweise ist bei einer solchen Vorrichtung auch eine Verfahrensvariante möglich, bei der ein Fehlersignal ausgegeben wird, wenn ein Integral der Beträge der Beschleunigungen des Fahrzeugs quer zu seiner Hauptbewegungsrichtung einen festgelegten Grenzwert überschreitet. Man erhält so außerdem eine Information über die Qualität der Bahn, beispielsweise von Rollschienen oder einer zweidimensionalen Abrollfläche.

Beispielsweise können für eine Einschienen-Hängebahn, für welche im Wesentlichen die Position in Verfahrrichtung bestimmt wird, mit Hilfe eines zweiachsigen Beschleunigungssensors außerdem Unregelmäßigkeiten der Bahn oder der Schienen oder mögliche Defekte am Fahrzeug festgestellt werden.

Ein zweidimensionaler Beschleunigungssensor und ein entsprechendes optisches Positionierungssystem kann in entsprechender Weise auch zum Bestimmen der Position in y-Richtung eingesetzt werden. Aus den Messdaten des Beschleunigungssensors und auf Grundlage einer für einen zurückliegenden Zeitpunkt vorliegenden Geschwindigkeitsinformation wird dabei sowohl eine in x-Richtung als auch eine in y-Richtung zurückgelegte Wegstrecke bestimmt.

Die Rechen- und Auswerteschritte des erfindungsgemäßen Verfahrens werden bevorzugt auf der Recheneinrichtung als Computerprogramm ausgeführt.

In grundsätzlich bekannter Weise kann dieses Computerprogramm auf einem computerlesbaren Datenträger, insbesondere in einem ROM eines Mikrocontrollers oder eines programmierbaren Logikbausteins gespeichert sein.

Weitere Vorteile und Merkmale der vorliegenden Erfindung werden nachstehend mit Bezug auf die beigefügten Figuren beschrieben.

### Hierin zeigt:

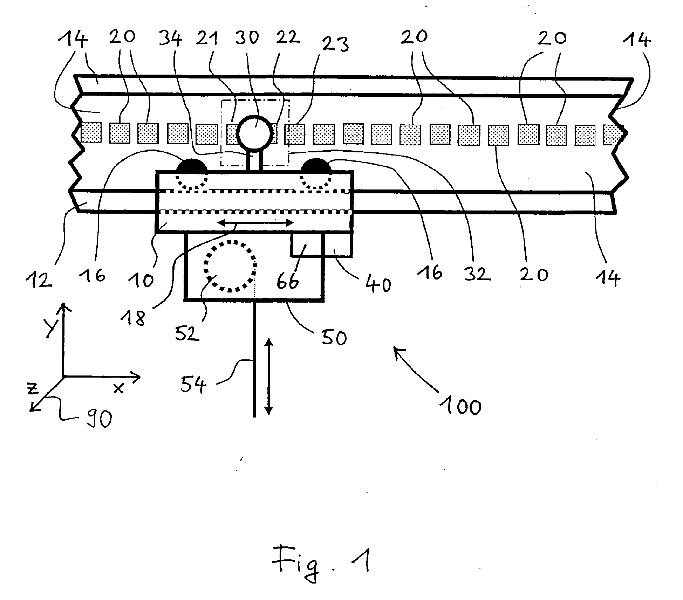

Figur 1: eine schematische Ansicht einer erfindungsgemäßen Vorrichtung an einer Laufkatze an einem Kranbalken.

Ein Anwendungsbeispiel für das erfindungsgemäße Verfahren und eine erfindungsgemäße Vorrichtung 100 wird mit Bezug auf Figur 1 erläutert. Gezeigt ist dort ein Fahrzeug 10, welches auf einem Träger 14 mit Hilfe von Rollen 16 und einem hier nicht gezeigten Antrieb verfahrbar ist. Fahrzeuge der in Figur 1 gezeigten Art werden auch als Laufkatzen bezeichnet. Der Träger 14 bildet eine Bahn 12, entlang welcher das Fahrzeug 10 beweglich ist. Die Bewegungsrichtung oder Hauptbewegungsrichtung des Fahrzeugs 10 ist in Figur 1 die x-Richtung und durch einen Doppelpfeil 18 angedeutet. In einem Unterbau 50 des Fahrzeugs 10 ist eine hier schematisch dargestellte Seilwinde 52 positioniert, mit welcher über ein Seil 54 Lasten geladen und transportiert werden können.

Die Raumrichtungen sind in einem Koordinatensystem 90 angedeutet.

Das in Figur 1 gezeigte Ausführungsbeispiel einer erfindungsgemäßen Vorrichtung 100 weist als wesentliche Bestandteile eine Digitalkamera 30, einen schematisch dargestellten Beschleunigungssensor 66 und eine Recheneinrichtung 40 auf, mit welcher sowohl die Digitalkamera 30 als auch der Beschleunigungssensor 66 wirkungsmäßig, typischerweise durch Verbindungskabel, verbunden sind.

Die Digitalkamera 30 ist über einen Haltearm 34 starr mit dem Fahrzeug 10 verbunden. Ein im Wesentlichen quadratischer Erfassungsbereich 32 der Digitalkamera 30 ist ebenso schematisch dargestellt.

Der Beschleunigungssensor 66 ist ebenfalls starr mit dem Fahrzeug 10 gekoppelt, so dass sichergestellt ist, dass die tatsächlichen Beschleunigungen des Fahrzeugs 10 gemessen werden. Bevorzugt handelt es sich bei dem Beschleunigungssensor 66 um einen zweiachsigen Beschleunigungssensor, mit welchem sowohl die Beschleunigungen des Fahrzeugs 10 in Richtung des Doppelpfeils 18, also in x-Richtung, als auch quer hierzu, in y-Richtung, gemessen werden. Grundsätzlich können hierfür aber auch separate, jeweils einachsige Beschleunigungssensoren, insbesondere für alle drei Raumrichtungen, vorgesehen sein.

In der erfindungsgemäß vorhandenen Recheneinrichtung 40 wird das erfindungsgemäße Computerprogramm abgearbeitet. Ein Computerprogrammprodukt im Sinn der Erfindung kann insbesondere die Recheneinrichtung 40 selbst mit zugehörigem ROM-Speicher sein.

Wesentlicher Bestandteil des hier beschriebenen erfindungsgemäßen optischen Positionierungssystems sind außerdem eine Vielzahl von insbesondere jeweils unterschiedlichen Markern 20, wobei es sich im gezeigten Beispiel um zweidimensionale Barcodes handelt. Diese Marker 20 sind entlang dem Träger 14 äquidistant angebracht. Typischerweise handelt es sich hierbei um aufgeklebte Bänder. In der gezeigten Situation werden von der Digitalkamera 30 die Marker 21 und 22 vollständig erfasst. Außerdem wird ein Randbereich des Markers 23 erfasst.

Gemäß den oben im Einzelnen beschriebenen Grundgedanken der Erfindung wird sodann durch die Recheneinrichtung 40 eine Positionsbestimmung durchgeführt, indem die im Erfassungsbereich 32 der Digitalkamera 30 liegenden Bilder der Barcodes 21, 22, 23 mit bildverarbeitenden Methoden zunächst identifiziert und sodann im Hinblick auf ihre Lage oder Position im Erfassungsbereich 32 ausgewertet werden. Hierdurch kann eine sehr präzise Positionsinformation bereitgestellt werden.

Da die hier beschriebenen Systeme insbesondere auch in robusten industriellen Umgebungen eingesetzt werden, besteht grundsätzlich die Gefahr, dass einzelne oder eventuell mehrere Barcodes beschädigt oder verschmutzt sind. Eine erste Maßnahme besteht in diesem Zusammenhang darin, Barcodes zu verwenden, in welchen die enthaltene Information redundant vorhanden ist. Gleichwohl kann es in industriellen Umgebungen vorkommen, dass die Barcodes verschmutzt oder beschädigt werden und demgemäß teilweise oder vollständig unlesbar sind. Hierdurch kann die Positionsbestimmung behindert, verfälscht oder eventuell sogar unmöglich gemacht werden.

Um in dieser Hinsicht zumindest eine Information darüber zu erhalten, ob eine Verschmutzung oder eine Beschädigung vorliegt, wird erfindungsgemäß mit Hilfe grundsätzlich bekannter Bilderkennungsalgorithmen auch eine Darstellungsqualität der Marker bestimmt und ausgewertet. Beispielsweise kann zu den jeweils abgespeicherten Positionsdaten auch die Qualität oder Darstellungsqualität der Barcodes ermittelt und abgespeichert werden. Grundsätzlich kann die Position des Fahrzeugs 10 dabei in allen drei Raumrichtungen bestimmt werden.

Wenn nun eine Verschmutzung oder eine Beschädigung erkannt wird, kann eine übergeordnete Steuerung, beispielsweise eine speicherprogrammierbare Steuerung, hiervon unterrichtet werden und ein Servicetechniker kann für eine Kontrolle oder gegebenenfalls einen Austausch der entsprechenden Stelle an der Bahn 12 beauftragt werden. Die fragliche Stelle kann dann sehr einfach aus der abgespeicherten x-Position ermittelt werden. In diesem Zusammenhang ist es durchaus sinnvoll, bereits eine kleine Verschlechterung zu melden, da eine Wartung somit in das nächste Wartungsintervall aufgenommen werden kann. Auf diese Weise können Ausfallzeiten deutlich reduziert und dementsprechend Kosten gespart werden.

Wenn eine Positionsbestimmung auf Grundlage der Barcodes nicht möglich ist, kann in der oben beschriebenen Weise gleichwohl eine Positionsinformation dadurch gewonnen werden, dass auf Grundlage eines zurückliegenden Positionsdatums unter Verwendung der Messdaten des Beschleunigungssensors 66 ein neuer Positionswert extrapoliert wird.

Mit der vorliegenden Erfindung werden ein neues Verfahren und eine neue Vorrichtung zur Positionsbestimmung für Fahrzeuge, insbesondere im industriellen Bereich bereitgestellt, mit welchen zum Einen deutlich längere Fahrwege bei besserer Positionsauflösung erzielt werden. Zum Anderen wird gemäß einem weiteren wesentlichen Gedanken der Erfindung außerdem mit Bildverarbeitungsmethoden die Darstellungsqualität der Marker, in der Regel der Barcodes, bewertet, so dass sehr zeitnah beispielsweise eine Information an eine speicherprogrammierbare Steuerung gegeben werden kann, wenn Teilbereiche eines Codebands ausgetauscht werden müssen.

## Patentansprüche

1. Verfahren zum Bestimmen der Position eines Fahrzeugs, welches entlang einer Bahn (12) bewegt wird,
wobei entlang der Bahn (12) Marker (20), insbesondere Codeträger oder Barcodes, angeordnet sind,
**dadurch gekennzeichnet,**
**dass** die Marker (20) mit einer an dem Fahrzeug (10) angeordneten Digitalkamera (30) erfasst werden,
**dass** mittels Bildverarbeitung aus einer Lage mindestens eines Markerbilds im Erfassungsbereich (32) der Digitalkamera (30) eine Relativposition des Fahrzeugs (10) bezüglich des jeweiligen Markers oder der jeweiligen Marker (21, 22, 23) bestimmt wird und
**dass** mittels Bildverarbeitung eine Darstellungsqualität der Marker bestimmt und ausgewertet wird.

2. Verfahren nach Anspruch 1,
**dadurch gekennzeichnet,**
**dass** als Marker (20) zweidimensionale Barcodes verwendet werden.

3. Verfahren nach Anspruch 1 oder 2,
**dadurch gekennzeichnet,**
**dass** auf den Markern (20) dieselbe Information jeweils wenigstens teilweise im Klartext und wenigstens teilweise codiert vorliegt.

4. Verfahren nach einem der Ansprüche 1 bis 3,
**dadurch gekennzeichnet,**
**dass** bei den verwendeten Markern (20) die enthaltene Information wenigstens teilweise in Reed-Solomon-Codierung vorliegt.

5. Verfahren nach einem der Ansprüche 1 bis 4,
**dadurch gekennzeichnet,**
**dass** zum Überprüfen der Konsistenz der ermittelten Information die als Klartext vorhandene Information eines Markers (20) mit der codierten Information des Markers (20) verglichen wird.

6. Verfahren nach einem der Ansprüche 1 bis 5,
**dadurch gekennzeichnet,**
**dass** zum Überprüfen der Konsistenz der ermittelten Information die Ergebnisse von zurückliegenden Messungen berücksichtigt werden.

7. Verfahren nach einem der Ansprüche 1 bis 6,
**dadurch gekennzeichnet,**
**dass** ein Fehlersignal ausgegeben wird, wenn die Darstellungsqualität der Marker (20) unter einen festgelegten Wert sinkt.

8. Verfahren nach Anspruch 7,
**dadurch gekennzeichnet,**
**dass** ein Fehlersignal ausgegeben wird, wenn eine festzulegende Anzahl von Markern (20) hintereinander unlesbar ist.

9. Verfahren nach einem der Ansprüche 1 bis 8,
**dadurch gekennzeichnet,**
**dass** mittels Bildverarbeitung geprüft wird, ob die Bereiche zwischen den Markern (20) strukturfrei, insbesondere weiß, sind.

10. Vorrichtung zum Bestimmen der Position eines Fahrzeugs, welches entlang einer Bahn (12) beweglich ist, insbesondere zur Durchführung des Verfahrens nach einem der Ansprüche 1 bis 9,
**gekennzeichnet durch**
eine an dem Fahrzeug (10) anzuordnende Digitalkamera (30) zum Erfassen von entlang der Bahn (12) angeordneten Markern (20), insbesondere Codeträgern oder Barcodes, und
eine Recheneinrichtung (40), welche eingerichtet ist zum Bestimmen einer Relativposition des Fahrzeugs (10) bezüglich mindestens eines Markers (21, 22, 23) mittels Bildverarbeitung aus einer Lage des Bilds des jeweiligen Markers (21, 22, 23) oder der Bilder der jeweiligen Marker (21, 22, 23) in einem Erfassungsbereich der Digitalkamera (30) und
zum Bestimmen und Auswerten einer Darstellungsqualität der Marker mittels Bildverarbeitung.

11. Vorrichtung nach Anspruch 10,
**dadurch gekennzeichnet,**
**dass** ein mit dem Fahrzeug (10) zu koppelnder Beschleunigungssensor (66) zumindest zum Messen der Beschleunigung des Fahrzeugs (10) in einer Hauptbewegungsrichtung des Fahrzeugs (10) vorhanden ist und
**dass** die Recheneinrichtung außerdem eingerichtet ist zum Bestimmen einer von dem Fahrzeug (10) bis zu einem Abfragezeitpunkt zurückgelegten Wegstrecke auf Grundlage von Messdaten des Beschleunigungssensors (66) und einer für einen zurückliegenden Zeitpunkt bekannten Geschwindigkeit des Fahrzeugs (10) und
zum Berechnen einer aktuellen Position des Fahrzeugs (10) unter Berücksichtigung eines zurückliegenden Positionsdatums und der auf Grundlage von Messdaten des Beschleunigungssensors (66) bestimmten Wegstrecke.

12. Vorrichtung nach Anspruch 10 oder 11,
**dadurch gekennzeichnet,**
**dass** der Beschleunigungssensor (66) ein zweiachsiger Beschleunigungssensor ist und zum Messen einer Beschleunigung des Fahrzeugs (10) in einer x-und in einer y-Richtung ausgelegt ist.

13. Vorrichtung nach Anspruch 12,
**dadurch gekennzeichnet,**
**dass** der zweiachsige Beschleunigungssensor (66) so an dem Fahrzeug (10) positioniert ist, dass die erste Messachse in Richtung einer Hauptbewegungsrichtung des Fahrzeugs (10) und die zweite Messachse in einer Richtung quer zur Hauptbewegungsrichtung des Fahrzeugs (10) ausgerichtet ist.

14. Computerprogramm mit Programmcodemitteln, um die Rechen- und Auswerteschritte eines Verfahrens nach einem der Ansprüche 1 bis 9 durchzuführen, wenn das Computerprogramm auf einem mit der Digitalkamera (30) wirkungsmäßig verbundenen Computer, insbesondere der Recheneinrichtung (40) gemäß Anspruch 10, ausgeführt wird.

15. Computerprodukt mit Programmcodemitteln, die auf ein computerlesbaren Datenträger gespeichert sind, um die Rechen- und Auswerteschritte eines Verfahrens nach einem der Ansprüche 1 bis 9 durchzuführen, wenn das Computerprogramm auf einem mit der Digitalkamera (30) wirkungsmäßig verbundenen Computer, insbesondere der Recheneinrichtung (40) gemäß Anspruch 10, ausgeführt wird.
